# EUROPEAN PATENT APPLICATION

(11) **EP 4 759 584 A1**
(43) Date of publication of application: **17.06.2026**
(21) Application number: 25212180.1
(22) Date of filing: 29.10.2025
(51) Int. Cl.: B60K 1/00, B60K 5/12

(54) **FRONT STRUCTURE OF VEHICLE**

(30) Priority: 10.12.2024 JP 2024215247
(71) Applicant: Suzuki Motor Corporation, Shizuoka 432-8611 (JP)
(72) Inventor: KAMOSHIDA, Hiroyuki, Hamamatsu-Shi, Shizuoka 432-8611 (JP)
(74) Representative: Plasseraud IP

(57) **Abstract**

Object

To provide a front structure of a vehicle capable of causing a drive device to fall obliquely downward below a dash panel at the time of a front collision of a vehicle and mitigating an impact transmitted from the drive device to the dash panel.

Solution

A rear mounting device 10 of a front structure of a vehicle 1 includes a mounting portion 12 fixed to a cross member 3 and a mounting bracket 13 to be connected to the mounting portion 12 and a drive device 5. A dash panel 25 is disposed above the mounting portion 12. The dash panel 25 has inclined lower surfaces 25a and 28a inclined downward from the front side toward the rear side. The rear mounting device 10 includes a mass 14 provided at an upper portion of the mounting portion 12 and having an inclined upper surface 14a inclined downward from the front side toward the rear side. The mass 14 is disposed at a position higher than a lower end portion 28b in an inclination direction of the inclined lower surfaces 25a and 28b.

## Description

### Technical Field

The present invention relates to a front structure of a vehicle.

### Background Art

In the related art, a power unit support mechanism for an automobile which prevents a power unit from protruding into a vehicle cabin at the time of a vehicle collision is known (see Patent Document 1).

This power unit support mechanism for an automobile includes an inner cylinder fitting fixed to the power unit and an outer cylinder fitting fixed to a suspension member of the vehicle coupled with each other by a rubber elastic body, reduces the rigidity of a part of the outer cylinder fitting, thus deforms the part of the outer cylinder fitting at the time of a vehicle collision to cause a rear portion of the power unit to fall obliquely downward in the vehicle, and can prevent the power unit from strongly colliding with a dash panel and protruding into the vehicle cabin.

### Citation List

### Patent Literature

Patent Document 1: JP 3767396 B

### Summary of Invention

### Technical Problem

The known power unit support mechanism for an automobile reduces the rigidity of a part of the outer cylinder fitting and thus deforms the part of the outer cylinder fitting at the time of a vehicle collision to cause a rear portion of the power unit to fall obliquely downward in the vehicle. However, it cannot be said that the above configuration alone can cause the rear portion of the power unit to reliably fall obliquely downward in the vehicle. Therefore, the power unit may collide with the dash panel with a strong impact force.

The present invention has been made in view of the above circumstances, and an object thereof is to provide a front structure of a vehicle capable of causing a drive device to reliably fall obliquely downward below a dash panel at the time of a front collision of a vehicle and mitigating an impact transmitted from the drive device to the dash panel.

### Solution to Problem

An embodiment of the present invention is a front structure of a vehicle including: a drive device disposed at a front part of a vehicle and configured to transmit a driving force to a drive wheel; a cross member disposed at a rear of the drive device and extending in a vehicle width direction; a mounting device configured to connect the drive device and the cross member in a front-rear direction and support the drive device on the cross member; and a dash panel disposed at a rear of the drive device. The mounting device includes a mounting portion fixed to the cross member and a mounting bracket to be connected to the mounting portion and the drive device. The dash panel is disposed above the mounting portion. The dash panel has an inclined lower surface inclined downward from a front side to a rear side. The mounting device includes an inclined member provided at an upper portion of the mounting portion and having an inclined upper surface inclined downward from the front side to the rear side. The inclined member is disposed at a position higher than a lower end portion in an inclination direction of the inclined lower surface.

### Advantageous Effects of Invention

As described above, the present invention can cause the drive device to reliably fall obliquely downward below the dash panel at the time of a front collision of the vehicle and mitigate the impact transmitted from the drive device to the dash panel.

### Brief Description of Drawings

FIG. 1 is a plan view of a front structure of a vehicle according to one example of the present invention.
FIG. 2 is a rear view of the front structure of a vehicle according to one example of the present invention.
FIG. 3 is a right side view of the front structure of a vehicle according to one example of the present invention.
FIG. 4 is a right side view of the front structure of a vehicle according to one example of the present invention, illustrating a state in which a mass is located immediately in front of a bracket at the time of a front collision of a vehicle.
FIG. 5 is a right side view of the front structure of a vehicle according to one example of the present invention, illustrating a state in which an inclined upper surface of the mass is in contact with an inclined lower surface of the bracket at the time of a front collision of the vehicle.

### Description of Embodiments

A front structure of a vehicle according to one embodiment of the present invention is a front structure of a vehicle including: a drive device disposed at a front part of a vehicle and configured to transmit a driving force to a drive wheel; a cross member disposed at a rear of the drive device and extending in a vehicle width direction; a mounting device connecting the drive device and the cross member in a front-rear direction and supporting the drive device on the cross member; and a dash panel disposed at a rear of the drive device. The mounting device includes a mounting portion fixed to the cross member and a mounting bracket to be connected to the mounting portion and the drive device. The dash panel is disposed above the mounting portion. The dash panel has an inclined lower surface inclined downward from a front side to a rear side. The mounting device includes an inclined member provided at an upper portion of the mounting portion and having an inclined upper surface inclined downward from the front side to the rear side. The inclined member is disposed at a position higher than a lower end portion in an inclination direction of the inclined lower surface.

This allows the front structure of a vehicle according to one embodiment of the present invention to cause the drive device to reliably fall obliquely downward below the dash panel at the time of a front collision of the vehicle and mitigate the impact transmitted from the drive device to the dash panel.

### Examples

Hereinafter, a front structure of a vehicle according to one example of the present invention will be described with reference to the drawings.

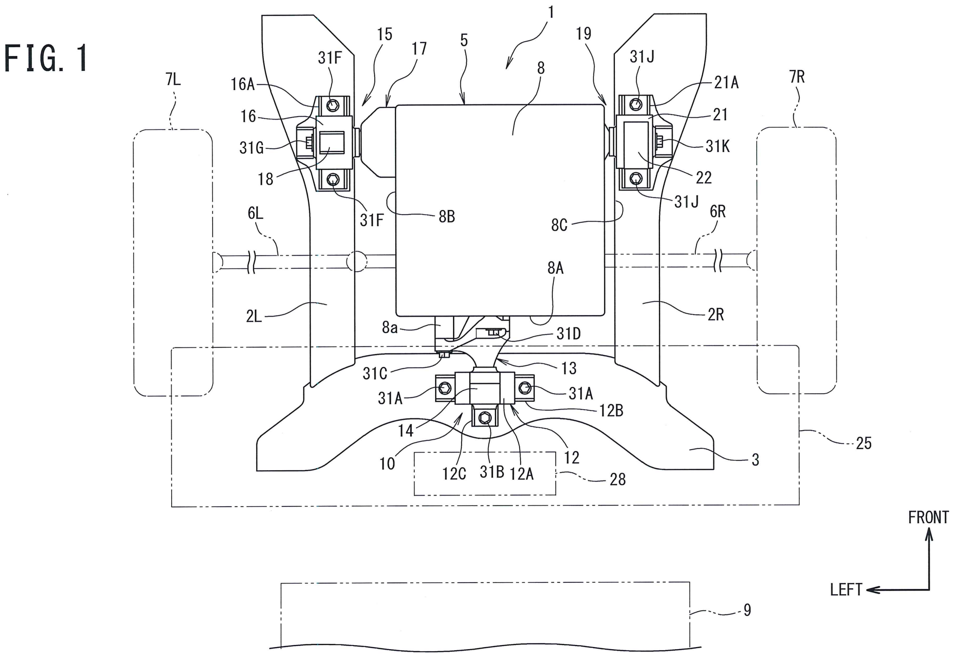

FIGS. 1 to 5 are diagrams illustrating a front structure of a vehicle according to one example of the present invention.

First, the configuration will be described.

In FIGS. 1 to FIG. 5, up, down, front, rear, left, and right directions are defined based on the drive device in a state of being disposed in a vehicle, where a front-rear direction of the vehicle is referred to as a "front-rear direction", a left-right direction of the vehicle (vehicle width direction) is referred to as a "left-right direction", and an up-down direction of the vehicle (height direction) is referred to as an "up-down direction".

As illustrated in FIG. 1, a vehicle 1 includes a left side member 2L, a right side member 2R, and a cross member 3.

The left side member 2L and the right side member 2R are disposed separated from each other in a vehicle width direction and extend in the front-rear direction. The vehicle width direction corresponds to the left-right direction.

The cross member 3 extends in the vehicle width direction, and left and right end portions thereof are connected to the left side member 2L and the right side member 2R, respectively.

A drive device 5 is disposed in a space surrounded by the left side member 2L, the right side member 2R, and the cross member 3.

Specifically, the drive device 5 is disposed in a front portion of the vehicle 1 between the left side member 2L and the right side member 2R in the vehicle width direction and is disposed in front of the cross member 3 in the front-rear direction.

The drive device 5 includes a motor generator, an inverter as an electric power control device for controlling electric power supplied to the motor generator, a reduction gear for reducing the driving force (rotation speed) of the motor generator, and a differential device for transmitting the power of the reduction gear to left and right front wheels 7L and 7R via a left drive shaft 6L and a right drive shaft 6R, none of which are illustrated.

That is, the drive device 5 transmits a driving force to the left and right front wheels 7L and 7R. The front wheels 7L and 7R of the present example constitute drive wheels.

The motor generator, the inverter, the reduction gear, and the differential device are accommodated in a drive case 8.

The motor generator has a function as an electric motor that is driven by electric power supplied from a high-voltage battery 9 via the inverter and a function as a generator that generates electric power by a reverse driving force input from the differential device.

The inverter converts direct current power supplied from the high-voltage battery 9 into three-phase alternating current power and supplies the three-phase alternating current power to the motor generator or converts three-phase alternating current power generated by the motor generator into direct current power and charges the high-voltage battery 9. The high-voltage battery 9 is composed of, for example, a secondary battery such as a lithium ion battery.

The high-voltage battery 9 is disposed at a rear of the cross member 3, and the high-voltage battery 9 and the cross member 3 are disposed at the same height position. The high-voltage battery 9 and the inverter of the drive device 5 are connected by a wire harness (not illustrated). The high-voltage battery 9 of the present example constitutes an electrical component.

A drive source, left and right rear drive shafts to which power of the drive source is transmitted, and left and right rear wheels, none of which are illustrated, are disposed in a rear portion of the vehicle 1.

The vehicle 1 of the present example travels in a two-wheel drive mode in which only the drive device 5 on the front side is driven, and travels in a four-wheel drive mode in which both the drive device 5 and the drive source are driven. The drive source in the rear side is not limited to a particular source.

As the drive device 5 on the front side, an internal combustion engine and a motor may be used as the drive source, or only an internal combustion engine may be used as the drive source, instead of using the motor of the present example as the drive source.

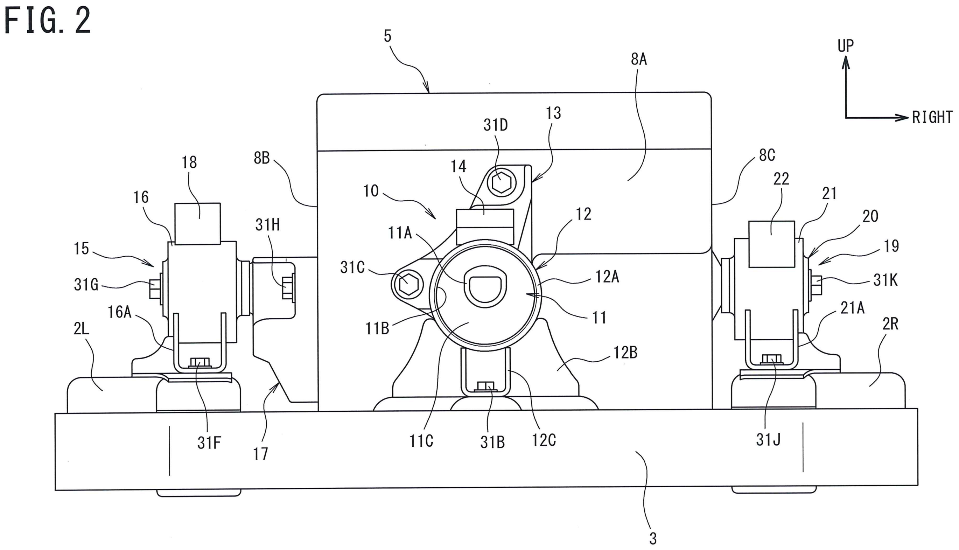

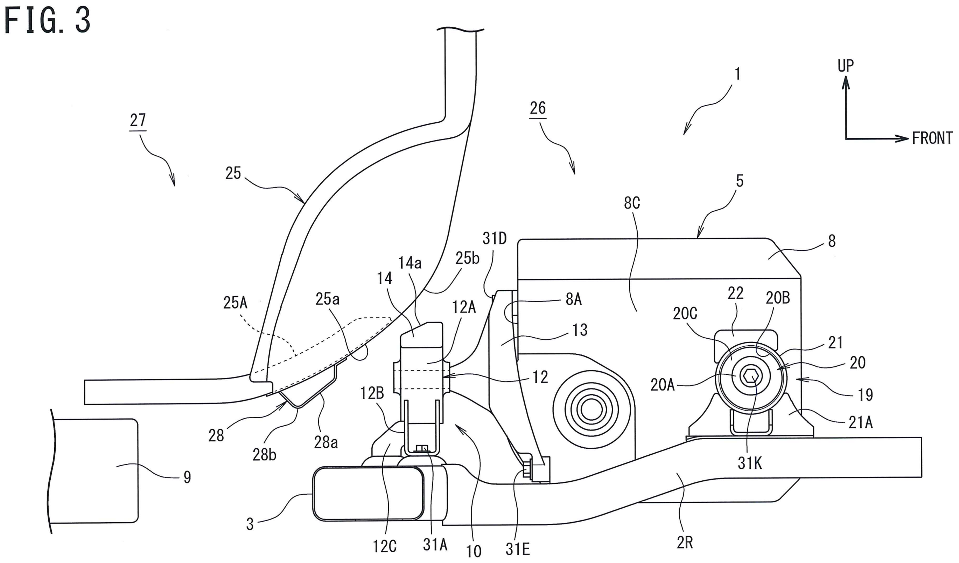

As illustrated in FIGS. 2 and 3, the drive device 5 is elastically supported by the cross member 3 with a rear mounting device 10.

As illustrated in FIG. 2, the rear mounting device 10 includes a mount bushing 11, a mounting portion 12, a mounting bracket 13, and a mass 14. The rear mounting device 10 of the present example constitutes a mounting device.

The mount bushing 11 includes an inner tube 11A whose central axis extends in the front-rear direction, an outer tube 11B which is provided on an outer side in a radial direction of the inner tube 11A and whose central axis extends in the front-rear direction, and a mount rubber 11C which is provided between the inner tube 11A and the outer tube 11B in the radial direction to connect the inner tube 11A and the outer tube 11B, and is formed in a tubular shape as a whole.

The mounting portion 12 includes a cylindrical portion 12A having a tubular shape extending in the front-rear direction, a first leg portion 12B, and a second leg portion 12C.

As illustrated in FIGS. 1 and 2, the first leg portion 12B extending in the vehicle width direction and the second leg portion 12C extending rearward from the first leg portion 12B are provided at a lower portion of the cylindrical portion 12A. The first leg portion 12B and the second leg portion 12C are fixed to a central portion of the cross member 3 in the vehicle width direction by bolts 31A and 31B (see FIG. 1).

The mount bushing 11 is press-fitted into the cylindrical portion 12A, and the mount bushing 11 is accommodated in the cylindrical portion 12A. The mass 14 is fixed to an upper portion of the cylindrical portion 12A by welding or the like.

Specifically, as illustrated in FIG. 1, a boss portion 8a is provided to a rear wall 8A, and the boss portion 8a protrudes rearward from the rear wall 8A. A left end portion of the mounting bracket 13 in the vehicle width direction is fastened to the boss portion 8a by a bolt 31C at a position behind the rear wall 8A.

An upper end portion of the mounting bracket 13 is fastened (connected) to the rear wall 8A by a bolt 31D, and a lower end portion of the mounting bracket 13 is fastened (connected) to the rear wall 8A by a bolt 31E.

That is, the mounting bracket 13 is connected to the mounting portion 12 and the drive device 5 to couple the drive device 5 and the mounting portion 12.

In this way, the rear mounting device 10 connects the drive device 5 and the cross member 3 in the front-rear direction and supports the drive device 5 on the cross member 3.

As illustrated in FIGS. 1 and 2, the drive device 5 is elastically supported by the left side member 2L with a left mounting device 15.

The left mounting device 15 includes a cylindrical portion 16, a mounting bracket 17, and a mass 18.

The cylindrical portion 16 extends in a cylindrical shape in the vehicle width direction.

A leg portion 16A is provided at a lower portion of the cylindrical portion 16, and the leg portion 16A is fixed to the left side member 2L by a bolt 31F.

Although not illustrated, a mount bushing is press-fitted into the cylindrical portion 16, and the mount bushing is accommodated in the cylindrical portion 16. The mass 18 is fixed to an upper portion of the cylindrical portion 16 by welding or the like.

The mounting bracket 17 is fastened to the mount bushing by a bolt 31G, is fastened to the left side wall 8B of the drive case 8 by a bolt 31H, and couples the mount bushing and the left side wall 8B of the drive case 8.

As illustrated in FIGS. 2 and 3, the drive device 5 is elastically supported by the right side member 2R with a right mounting device 19.

The right mounting device 19 includes a mount bushing 20, a cylindrical portion 21, and a mass 22.

The mount bushing 20 includes an inner tube 20A whose central axis extends in the vehicle width direction, an outer tube 20B which is provided on an outer side in the radial direction of the inner tube 20A and whose central axis extends in the vehicle width direction, and a mount rubber 20C which is provided between the inner tube 20A and the outer tube 20B in the radial direction to connect the inner tube 20A and the outer tube 20B and is formed in a tubular shape as a whole.

The cylindrical portion 21 extends in a cylindrical shape in the vehicle width direction. A leg portion 21A is provided at a lower portion of the cylindrical portion 21, and the leg portion 21A is fixed to the right side member 2R by a bolt 31J.

The mount bushing 20 is press-fitted into the cylindrical portion 21, and the mount bushing 20 is accommodated in the cylindrical portion 21. The mass 22 is fixed to an upper portion of the cylindrical portion 21 by welding or the like.

The mount bushing 20 is fastened to a right side wall 8C of the drive case 8 by a bolt 31K, and the cylindrical portion 21 is connected to the right side wall 8C of the drive case 8 via the mount bushing 20.

That is, the drive device 5 is elastically supported by the left side member 2L, the right side member 2R, and the cross member 3 so as to be placed on the left side member 2L, the right side member 2R, and the cross member 3 by the rear mounting device 10, the left mounting device 15, and the right mounting device 19.

As illustrated in FIG. 3, the vehicle 1 is provided with a dash panel 25. The dash panel 25 extends in the vehicle width direction and obliquely in the up-down direction and is disposed on a rear side of the drive device 5 and above the mounting portion 12.

The dash panel 25 partitions the vehicle 1 into an engine room 26 in which the drive device 5 is accommodated and a vehicle cabin 27 in which an occupant rides. That is, a front side of the dash panel 25 constitutes the engine room 26, and a rear side of the dash panel 25 constitutes the vehicle cabin 27.

An inclined lower surface 25a is formed at a lower end of the dash panel 25, and the inclined lower surface 25a is inclined downward from the front side toward the rear side.

A bracket 28 having a substantially U-shape is fixed to a side of a lower end portion in an inclination direction of the inclined lower surface 25a of the dash panel 25. The bracket 28 extends in the vehicle width direction of the dash panel 25 (see FIG. 1) and protrudes downward below the inclined lower surface 25a. The bracket 28 of the present example constitutes a reinforcing member.

An inclined lower surface 28a is formed at a lower surface of the bracket 28, and the inclined lower surface 28a is inclined downward from the front side toward the rear side. That is, the inclined lower surfaces 25a and 28a inclined downward from the front side toward the rear side are formed at the lower surface of the dash panel 25, and the lower end portion in the inclination direction of the inclined lower surface 25a is composed of the inclined lower surface 28a of the bracket 28.

An inclined upper surface 14a is formed at an upper surface of the mass 14, and the inclined upper surface 14a is inclined downward from the front side toward the rear side. The mass 14 of the present example constitutes an inclined member.

The mass 14 is disposed above a lower end portion 28b in the inclination direction of the inclined lower surface 28a and below an upper end portion 25b in the inclination direction of the inclined lower surface 25a, and is disposed between the lower end portion 28b in the inclination direction of the inclined lower surface 28a and the upper end portion 25b in the inclination direction of the inclined lower surface 25a in the front-rear direction.

A lower end portion of the dash panel 25 is reinforced by a reinforcing plate 25A, and the inclined lower surface 25a is reinforced by the reinforcing plate 25A and the bracket 28 and has high rigidity.

Next, a front structure of the vehicle 1 of the present example will be described.

The front structure of the vehicle 1 of the present example includes: the drive device 5 disposed at a front part of the vehicle 1 and configured to transmit a driving force to the front wheels 7L and 7R; the cross member 3 disposed at a rear of the drive device 5 and extending in the vehicle width direction; the rear mounting device 10 connecting the drive device 5 and the cross member 3 in the front-rear direction and configured to support the drive device 5 on the cross member 3; and the dash panel 25 disposed at a rear of the drive device 5.

The rear mounting device 10 includes the mounting portion 12 fixed to the cross member 3 and the mounting bracket 13 to be connected to the mounting portion 12 and the drive device 5, and the dash panel 25 is disposed above the mounting portion 12.

The dash panel 25 has the inclined lower surfaces 25a and 28a inclined downward from the front side toward the rear side. The rear mounting device 10 includes the mass 14 provided at an upper portion of the mounting portion 12 and having the inclined upper surface 14a inclined downward from the front side toward the rear side. The mass 14 is disposed at a position higher than the lower end portion 28b in the inclination direction of the inclined lower surfaces 25a and 28b.

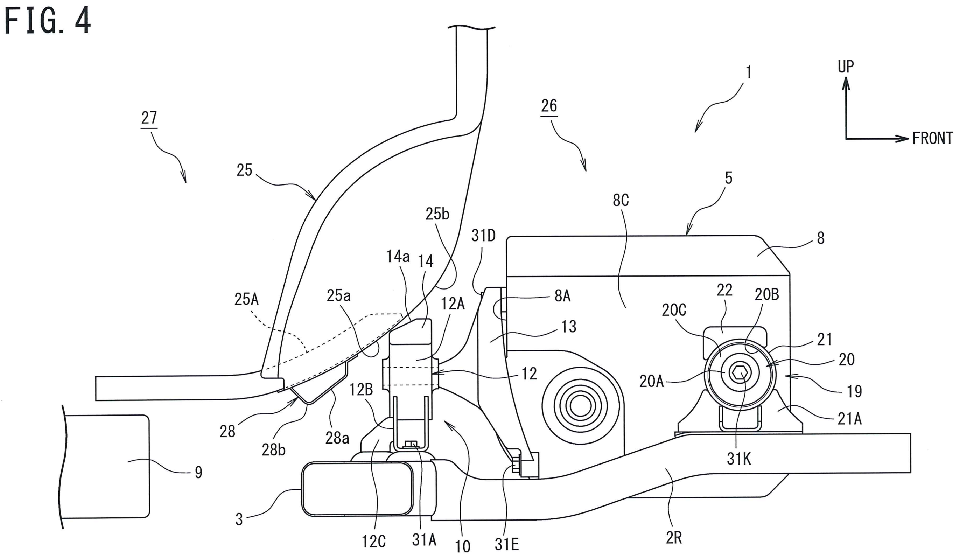

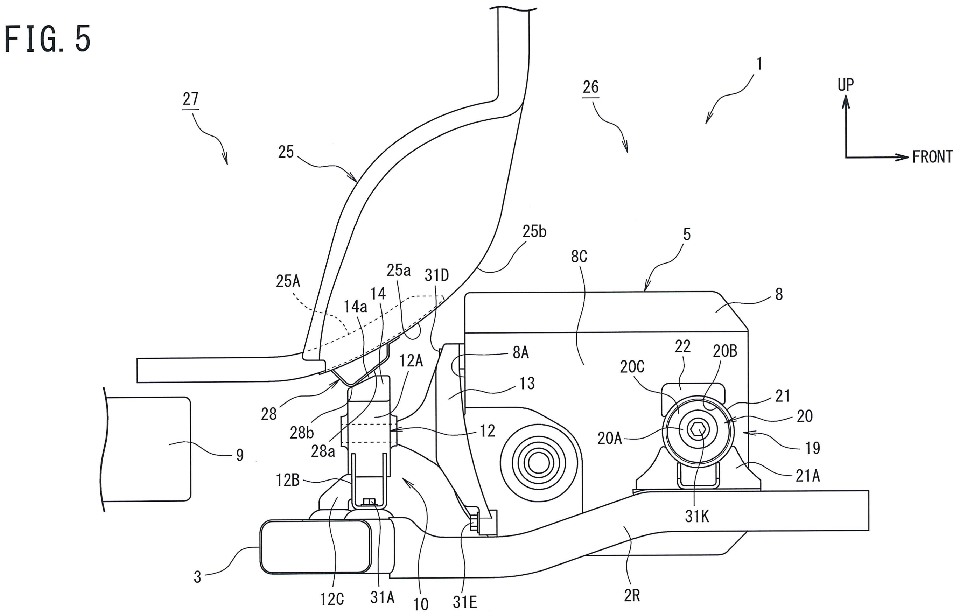

Accordingly, when an impact is applied to the drive device 5 from the front side and the drive device 5 moves rearward at the time of a front collision of the vehicle 1, the inclined upper surface 14a of the mass 14 comes into contact with the inclined lower surface 25a of the dash panel 25 near the bracket 28 and moves obliquely downward to the rear side along the inclined lower surface 25a (see FIG. 4), and then comes into contact with the inclined lower surface 28a of the bracket 28 and moves obliquely downward to the rear side along the inclined lower surface 28a (see FIG. 5).

Here, the positional relationship between the inclined lower surface 25a of the dash panel 25 and the inclined upper surface 14a of the mass 14 is set to a position at which the inclined upper surface 14a of the mass 14 comes into contact with the inclined lower surface 25a of the dash panel 25 near the bracket 28 when the drive device 5 moves rearward. Instead, a position at which the inclined upper surface 14a of the mass 14 immediately comes into contact with the inclined lower surface 28a of the bracket 28 when the drive device 5 moves rearward may be set.

That is, the inclined upper surface 14a of the mass 14 preferably comes into contact with the inclined lower surface of the dash panel 25 at a portion of the dash panel 25 where the rigidity is high.

This can cause the drive device 5 to reliably fall obliquely downward and rearward with respect to the dash panel 25 at the time of a front collision of the vehicle 1 and mitigate the impact transmitted from the drive device 5 to the dash panel 25.

The drive device 5 can be caused to reliably fall obliquely downward and rearward by using the mass 14 and the dash panel 25. This eliminates a high-strength stopper or the like for restricting the rearward movement of the drive device 5 at a rear of the drive device 5. Therefore, the front structure of the vehicle 1 can be simplified, and the cost of the front structure of the vehicle 1 can be reduced.

In the front structure of the vehicle 1 of the present example, the bracket 28 for reinforcing the dash panel 25 is provided on the side of the lower end portion in the inclination direction of the inclined lower surface 25a of the dash panel 25, and the bracket 28 has the inclined lower surface 28a inclined downward from the front side toward the rear side.

The lower end portion of the inclined lower surface 25a is located below the upper end portion 25b in the inclination direction, and when the inclined upper surface 14a of the mass 14 moves along the inclined lower surface 25a and the drive device 5 is put obliquely downward and rearward, a reactive force acting on the inclined lower surface 25a from the drive device 5 (a load acting upward from the drive device 5) increases.

Therefore, reinforcing the side of the lower end portion of the inclined lower surface 25a with the bracket 28 and moving the inclined upper surface 14a of the mass 14 along the inclined lower surface 28a of the bracket 28 allows, even when a large reactive force acts on the inclined lower surface 28a from the drive device 5, the rigidity of the dash panel 25 against an impact force applied from the drive device 5 to be increased and allows the impact transmitted from the drive device 5 to the dash panel 25 to be more effectively mitigated.

In the front structure of the vehicle 1 of the present example, the high-voltage battery 9 is disposed at a rear of the cross member 3, and the high-voltage battery 9 and the cross member 3 are disposed at the same height position.

This can cause, when the drive device 5 is caused to fall obliquely downward and rearward, the cross member 3 to fall obliquely downward and rearward with respect to the high-voltage battery 9 integrally with the drive device 5 and thus prevent the cross member 3 from colliding with the high-voltage battery 9. Therefore, the high-voltage battery 9 can be protected from the cross member 3.

In the front structure of the vehicle 1 of the present example, the mounting portion 12 includes the cylindrical portion 12A in which the mount bushing 11 is accommodated and the mass 14 attached to the upper portion of the cylindrical portion 12A, and the mass 14 is formed with the inclined upper surface 14a.

This eliminates addition of a new member for causing the drive device 5 to fall obliquely downward and rearward, thus more effectively preventing an increase in the number of components of the front structure of the vehicle 1 and more effectively reducing the cost of the front structure of the vehicle 1.

While examples of the present invention have been disclosed, it will be apparent to those skilled in the art that modifications may be made without departing from the scope of the present invention. All such modifications and equivalents are intended to be included in the following claims.

### Reference Signs List

1 Vehicle
3 Cross member
5 Drive device
7L, 7R Front wheel (drive wheel)
9 High-voltage battery (electrical component)
10 Rear mounting device (mounting device)
11 Mount bushing
12 Mounting portion
12A Cylindrical portion
13 Mounting bracket
14 Mass (inclined member)
14a Inclined upper surface
25 Dash panel
25a Inclined lower surface
28 Bracket (reinforcing member)
28a Inclined lower surface
28b Lower end portion (lower end portion in inclination direction of inclined lower surface)

## Claims

1. A front structure of a vehicle comprising:
a drive device (5) disposed at a front part of a vehicle (1) and configured to transmit a driving force to a drive wheel (7L, 7R);
a cross member (3) disposed at a rear of the drive device (5) and extending in a vehicle width direction;
a mounting device (10) configured to connect the drive device (5) and the cross member (3) in a front-rear direction and support the drive device (5) on the cross member (3); and
a dash panel (25) disposed at a rear of the drive device (5),
the mounting device (10) comprising a mounting portion (12) fixed to the cross member (3) and a mounting bracket (13) to be connected to the mounting portion (12) and the drive device (5),
the dash panel (25) being disposed above the mounting portion (12), wherein
the dash panel (25) has an inclined lower surface (28a) inclined downward from a front side toward a rear side,
the mounting device (10) comprises an inclined member (14) provided at an upper portion of the mounting portion (12) and having an inclined upper surface (14a) inclined downward from the front side toward the rear side, and
the inclined member (14) is disposed at a position higher than a lower end portion (28b) in an inclination direction of the inclined lower surface (25a).

2. The front structure of a vehicle according to claim 1, wherein
a reinforcing member (28) that reinforces the dash panel (25) is provided on a side of the lower end portion (28b) in the inclination direction of the inclined lower surface (25a) of the dash panel (25), and
the reinforcing member (28) has an inclined lower surface (28a) inclined downward from the front side toward the rear side.

3. The front structure of a vehicle according to claim 1 or 2, wherein
an electrical component (9) is disposed at a rear of the cross member (3), and
the electrical component (9) and the cross member (3) are disposed at a same height position.

4. The front structure of a vehicle according to claim 1 or 2, wherein
the mounting portion (12) comprises a cylindrical portion (12A) in which a mount bushing (11) is accommodated and a mass (14) attached to an upper portion of the cylindrical portion (12A), and
the inclined member (14) is composed of the mass (14).

5. The front structure of a vehicle according to claim 3, wherein
the mounting portion (12) comprises a cylindrical portion (12A) in which a mount bushing (11) is accommodated and a mass (14) attached to an upper portion of the cylindrical portion (12A), and
the inclined member (14) is composed of the mass (14).
